# EUROPÄISCHE PATENTSCHRIFT

(11) **EP 4 113 094 B1**
(45) Veröffentlichungstag und Bekanntmachung des Hinweises auf die Patenterteilung: **25.06.2025**
(21) Anmeldenummer: 21183561.6
(22) Anmeldetag: 02.07.2021
(51) Int. Cl.: G01M 13/021

(54) **VERFAHREN UND MESSSYSTEM**
METHOD AND TESTING SYSTEM
MÉTHODE ET SYSTÈME D'ESSAI

(43) Veröffentlichungstag der Anmeldung: 04.01.2023
(73) Patentinhaber: Klingelnberg GmbH, 42499 Hückeswagen (DE)
(72) Erfinder: Gorgels, Christof, 50733 Köln (DE); Finkeldey, Markus, 45527 Hattingen (DE)
(74) Vertreter: Janke Scholl Patentanwälte PartG mbB

(56) Entgegenhaltungen:
- EP-A1- 3 581 883
- US-A1- 2011 032 538
- US-B2- 10 209 051

## Beschreibung

Die vorliegende Erfindung betrifft ein Verfahren zum Messen und Auswerten einer Verzahnung. Weiter betrifft die Erfindung ein Messsystem zur Ausführung eines solchen Verfahrens.

Die Geräusche von Fahrzeuggetrieben werden in Kraftfahrzeugen mit Hybridantrieb oder vollelektrischem Antrieb nicht mehr durch das Motorgeräusch maskiert. Getriebegeräusche, die durch das Abwälzen der Zahnradpaare eines Getriebes entstehen, können daher von den Fahrzeuginsassen wahrgenommen und als störend empfunden werden. Die Untersuchung des Geräuschverhaltens von Verzahnungen hat sich im Zuge des Trends zu Hybridantrieben oder vollelektrischen Antrieben in den vergangenen Jahren von einer Randdisziplin der universitären Forschung zu einem wichtigen Qualitätsmerkmal in der industriellen Herstellung von Getrieben entwickelt.

Es hat sich gezeigt, dass allein eine fertigungstechnische Reduzierung der Abweichungen einer Verzahnung von ihrer Sollgeometrie, wie sie in der konventionellen Einzelfehlerprüfung ermittelt werden, nicht zwingend auch zu einem besseren Geräuschverhalten der Verzahnung in der Geräuschprüfung bzw. Wälzprüfung führen. So kann eine geräuschauffällige Verzahnung bei Betrachtung der Einzelfehlerprüfung präziser gefertigt sein als eine geräuschunauffällige Verzahnung. Für die Herstellung von Verzahnungen besteht daher die Forderung, einerseits die vorgegebenen Fertigungstoleranzen einzuhalten und andererseits zusätzlich den Vorgaben an das Geräuschverhalten gerecht zu werden.

Die Geräusche einer Verzahnung entstehen durch den Zahnkontakt, also das Abwälzen der Zahnflanken. Zur Analyse dominanter Frequenzen einer geräuschauffälligen Verzahnung wird ein während des Abwälzens einer Verzahnung gemessenes Geräusch in ein Ordnungsspektrum überführt, z.B. mithilfe der FourierTransformation.

Neben den Zahneingriffsordnungen weist ein solches Ordnungsspektrum auch sogenannte "Geisterordnungen" auf, die nicht durch die Verzahnungsauslegung beeinflussbar sind und aus Fertigungsfehlern resultieren. Dominante Geisterordnungen können beispielsweise durch Aufspannfehler, Werkzeugfehler, defekte Lager oder den Axialvorschub innerhalb einer Werkzeugmaschine entstehen. Es ist z.B. ersichtlich, dass ein Taumel eines Werkzeugs beim Herstellen der Verzahnung eine periodisch wiederkehrende Abweichung von der Sollgeometrie auf den Zahnflanken abbildet. Diese Abweichung kann mit präzisen Koordinatenmessgeräten geometrisch erfasst werden.

In vielen Fällen kann ein Zusammenhang zwischen auf den Oberflächen der Zahnflanken geometrisch erfassbaren Welligkeiten und den akustisch erfassten, dominanten Geisterordnungen hergestellt werden. Somit kann mithilfe der geometrischen Erfassung von Oberflächenwelligkeiten einer Verzahnung auf ein potentiell kritisches Geräuschverhalten einer Verzahnung und/oder auf den Zustand einer Werkzeugmaschine geschlossen werden.

Als Eingangsdaten zur Bestimmung von Oberflächenwelligkeiten und anderen Verzahnungsabweichungen ist es vorteilhaft, möglichst vollständige Messdaten zur Topographie der einzelnen Zahnflanken einer Verzahnung zu erfassen. Die vollständige Messung der Topographie jeder einzelnen Zahnflanke ist jedoch zeitintensiv und in der industriellen Serienfertigung nur schwer darstellbar. Das Dokument US 2011/032538 A1 beschreibt ein Verfahren zur optischen Messung des Aufmaßes eines hartfeinzubearbeitenden Zahnrads, wobei Messwerte einer Plausibilitätsprüfung unterzogen werden. Das Dokument US 10 209 051 B1 betrifft die Messung einer Verzahnung, wobei einzelne Bereiche der Zahnflanke mit höherer Auflösung gemessen werden. Das Dokument EP3581883A1 betrifft ein Verfahren zum optischen Vermessen einer Verzahnung.

Der vorliegenden Erfindung liegt daher die technische Problemstellung zugrunde, ein verbessertes Verfahren zum Messen und Auswerten von Abweichungen einer Verzahnung anzugeben, das insbesondere eine zuverlässige Analyse von Oberflächenwelligkeiten bei kurzer Zykluszeit bzw. Messdauer ermöglicht. Weiter soll ein Messsystem zur Durchführung eines solchen Verfahrens angegeben werden.

Die voranstehend beschriebene, technische Problemstellung wird jeweils durch die unabhängigen Ansprüche gelöst. Weitere Ausgestaltungen der Erfindung ergeben sich aus den abhängigen Ansprüchen und der nachstehen Beschreibung.

Gemäß einem ersten Aspekt betrifft die Erfindung ein Verfahren nach Anspruch 1.

Das Verfahren ermöglicht insbesondere ein zügiges Erfassen von Segmenten der Zahnflanke, wie z.B. von Profillinien und/oder der Topographie der Zahnflanken der Verzahnung, in dem die Messung optisch durchgeführt wird und zudem lediglich Segmente der Zahnflanke gemessen werden, die extrapoliert und anschließend ausgewertet werden.

Dem Verfahren liegt die Erkenntnis zu Grunde, dass sich insbesondere systematische Abweichungen der Zahnflanken in den nicht gemessenen Bereichen in zu den gemessenen Bereichen vergleichbarere Weise fortsetzen und daher extrapoliert werden können. Es ist daher z.B. davon auszugehen, dass sich eine Welligkeit, die im Bereich einer Zahnmitte gemessen wird, und die z.B. auf einen Lagerschaden einer Werkzeugmaschine zurückzuführen ist, in gleicher Weise in die Randbereiche der Zahnflanke fortsetzen wird.

Die Extrapolation kann z.B. mithilfe einer bekannten Soll-Geometrie der Verzahnung erfolgen, wobei z.B. gemessene Welligkeiten oder Abweichungen der gemessenen Ist-Geometrie der Verzahnung in nicht gemessenen Bereiche der Ist-Geometrie übertragen werden, in dem die gemessenen Welligkeiten oder Abweichungen der Ist-Geometrie der Soll-Geometrie in den nicht gemessenen Bereichen überlagert werden.

Wenn vorliegend von extrapolierten Segmenten gesprochen wird, so umfassen diese extrapolierten Segmente sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden.

Erfindungsgemäß ist vorgesehen, dass das Segment der Zahnflanke einen Abschnitt einer Profillinie der Zahnflanke aufweist oder aus einem Abschnitt einer Profillinie der Zahnflanke besteht und das Extrapolieren des gemessenen Segments zu dem extrapolierten Segment ein Extrapolieren des Abschnitts der Profilinie zu einer extrapolierten Profillinie aufweist. Das extrapolierte Segment kann daher eine extrapolierte Profillinie sein.

Erfindungsgemäß ist vorgesehen, dass eine Länge des an der Zahnflanke gemessenen Abschnitts der Profillinie kürzer ist als eine Zahnhöhe des Zahns, wobei eine Länge der extrapolierten Profilinie größer ist als die Länge des gemessenen Abschnitts der Profillinie, aus dem die extrapolierte Profilinie extrapoliert worden ist.

Wenn vorliegend von extrapolierten Profillinien gesprochen wird, so umfassen diese extrapolierten Profillinien sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden.

Es kann vorgesehen sein, dass das Segment der Zahnflanke einen Abschnitt einer Flankenlinie der Zahnflanke aufweist oder aus einem Abschnitt einer Flankenlinie der Zahnflanke besteht und das Extrapolieren des gemessenen Segments zu dem extrapolierten Segment ein Extrapolieren des Abschnitts der Flankenlinie zu einer extrapolierten Flankenlinie aufweist. Das extrapolierte Segment kann daher eine extrapolierte Flankenlinie sein oder aufweisen.

Wenn vorliegend von extrapolierten Flankenlinie gesprochen wird, so umfassen diese extrapolierten Flankenlinien sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden.

Es kann vorgesehen sein, dass das Segment der Zahnflanke eine Teilfläche der Zahnflanke aufweist oder aus einer Teilfläche der Zahnflanke besteht und das Extrapolieren des gemessenen Segments zu dem extrapolierten Segment ein Extrapolieren der Teilfläche zu einer extrapolierten Teilfläche aufweist. Das extrapolierte Segment kann daher eine extrapolierte Teilfläche sein oder aufweisen. Die Teilfläche kann z.B. mittels eines Messgitters oder durch eine Messung einer Vielzahl von Abschnitten von Profillinien und/oder Abschnitten von Flankenlinien optisch gemessen worden sein.

Wenn vorliegend von extrapolierten Teilflächen gesprochen wird, so umfassen diese extrapolierten Teilflächen sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden.

Die extrapolierten Teilfläche kann zudem interpolierte Werte aufweisen.

Abschnitte von Profilinien, Abschnitte von Flankenlinien oder Teilflächen der Zahnflanke können mittels des optischen Messsystems z.B. derart erfasst werden, dass eine Vielzahl einzelner Messpunkte entlang der zu messenden Abschnitte bzw. über die entsprechende Teilfläche verteilt erfasst werden. Hierzu kann eine Auflösung bzw. eine Anzahl der zu erfassenden Messpunkte je zu erfassender Längen- bzw. Flächeneinheit vorgegeben werden.

Insbesondere kann ein Programm zur Auswertung der Abweichungen verwendet werden, das als Eingangsdaten einen größeren an der jeweiligen Zahnflanke gemessenen Bereich benötigt, als es die optisch gemessenen Segmente der Zahnflanken zulassen würden, in dem die extrapolierten Segmente mit diesem Programm ausgewertet werden. Soweit die gemessenen Segmente z.B. Abschnitte von Profillinien aufweisen, kann beispielsweise ein Auswerteprogramm verwendet werden, das als Eingangsdaten üblicherweise taktile erfasste, vollständige Profillinien oder Topographiedaten benötigt, jedoch stattdessen die optisch erfassten und extrapolierten Profillinien als Eingangsdaten verwendet werden.

Wenn vorliegend von Abweichungen gesprochen wird, so handelt es sich dabei um Abweichungen der gefertigten Ist-Geometrie der Verzahnung von einer vorgegebenen Soll-Geometrie der Verzahnung.

Wenn vorliegend von einer Verzahnung gesprochen wird so handelt es sich dabei insbesondere um ein Zahnrad einer Laufverzahnung, die zum Übertragen und Wandeln von Drehzahlen und Drehmomenten zwischen rotierenden Wellen eingerichtet ist. Beispielsweise kann es sich bei einem solchen Zahnrad um einen Tellerrad oder ein Ritzel einer Kegelradpaarung handeln oder um ein gerad- oder schrägverzahntes Stirnrad einer Stirnradpaarung handeln. Alternativ kann es sich bei der Verzahnung um ein Zahnrad einer Planverzahnung handeln, die zum formschlüssigen Übertragen einer Antriebsleistung zwischen zwei Wellen nach Art einer Kupplung dient.

Wenn vorliegend von einer optischen Messvorrichtung gesprochen wird, so weist diese optische Messvorrichtung insbesondere ein optisches Messsystem zur optischen Abstandsmessung auf, wie z.B. einen konfokal-chromatischen Abstandssensor, ein Laser-Triangulationssystem oder dergleichen auf.

Es kann vorgesehen sein, dass das Auswerten von Abweichungen ein Bestimmen systematischer Abweichungen aufweist, wobei insbesondere eine Welligkeitsanalyse der extrapolierten Segmente, wie z.B. der extrapolierten Profilinie, durchgeführt wird. Die Welligkeitsanalyse kann ein Bestimmen einer Richtung von Oberflächenwelligkeiten der extrapolierten Segmente, insbesondere extrapolierten Profillinien, aufweisen. Alternativ oder ergänzend kann die Welligkeitsanalyse eine Frequenzanalyse von Oberflächenwelligkeiten der extrapolierten Segmente, insbesondere extrapolierten Profillinien, aufweisen.

Es kann vorgesehen sein, dass mindestens ein Abschnitt mindestens einer oder mehr weiterer Profillinien der Zahnflanke gemessen werden. Es kann daher vorgesehen sein, dass zwei oder mehr Abschnitte von Profilinien einer Zahnflanke gemessen werden.

Es kann vorgesehenen sein, dass mindestens ein Abschnitt einer Profilinie an allen Zahnflanken der Verzahnung gemessen wird. Es kann vorgesehen sein, dass zwei oder mehr Abschnitte zweier oder mehr Profillinien an allen Zahnflanken der Verzahnung gemessen werden.

Alternativ oder ergänzend kann vorgesehen sein, dass die Länge eines Abschnitts der Profillinie mehr als 30 % der Zahnhöhe des Zahns beträgt, insbesondere mehr als 30 % einer um eine Höhe einer Kopfrücknahme und/oder einer Höhe des Zahnfußes des Zahns reduzierten Zahnhöhe des Zahns beträgt.

Insbesondere kann vorgesehen sein, dass eine optische Messvorrichtung verwendet wird, deren Messbereich mehr als 30 % der Zahnhöhe des Zahns abdeckt, insbesondere mehr als 30 % einer um eine Höhe einer Kopfrücknahme und/oder einer Höhe des Zahnfußes des Zahns reduzierten Zahnhöhe des Zahns abdeckt.

Alternativ oder ergänzend kann vorgesehen sein, dass die Länge des Abschnitts der Profillinie weniger als 70 % der Zahnhöhe des Zahns beträgt, insbesondere weniger als 70 % einer um eine Höhe einer Kopfrücknahme und/oder einer Höhe des Zahnfußes des Zahns reduzierten Zahnhöhe des Zahns beträgt.

Insbesondere kann vorgesehen sein, dass eine optische Messvorrichtung verwendet wird, deren Messbereich weniger als 70 % der Zahnhöhe des Zahns abdeckt, insbesondere weniger als 70 % einer um eine Höhe einer Kopfrücknahme und/oder einer Höhe des Zahnfußes des Zahns reduzierten Zahnhöhe des Zahns abdeckt.

Alternativ oder ergänzend kann vorgesehen sein der Abschnitt der Profillinie innerhalb eines aktiven Bereichs der Zahnflanke liegt, und eine Länge des Abschnitts der Profillinie geringer ist als eine in Profilrichtung gemessene Länge des aktiven Bereichs der Zahnflanke, wobei der aktive Bereich der Zahnflanke derjenige Bereich ist, der im Betrieb des Zahnrads beim Abwälzen mit einer Gegenflanken in Kontakt ist.

Alternativ oder ergänzend kann vorgesehen sein, dass eine extrapolierte Topographie der Zahnflanke bestimmt und diese extrapolierte Topographie ausgewertet wird. Aus einer Mehrzahl von Abschnitten z.B. der Profillinien einer Flanke kann daher insbesondere eine extrapolierte Topographie berechnet werden, die insbesondere einer Welligkeitsanalyse zum Bestimmen von Oberflächenwelligkeiten unterzogen wird. Insbesondere wird dabei zunächst für jede Flanke eine Mehrzahl extrapolierter Profillinien bestimmt.

Wenn vorliegend von einer extrapolierten Topographie gesprochen wird, so umfasst diese extrapolierte Topographie sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden.

Die extrapolierten Topographie kann zudem interpolierte Werte aufweisen.

Nach einer weiteren Ausgestaltung des Verfahrens kann vorgesehen sein, dass zwei oder mehr Bereiche der Zähne taktil vermessen werden, insbesondere vier oder mehr Bereiche der Zähne taktil vermessen werden, insbesondere genau vier Bereiche oder genau acht Bereiche der Zähne taktil vermessen werden. Die taktile Messung dient insbesondere der Verifikation der extrapolierten Segmente.

Nach einer weiteren Ausgestaltung des Verfahrens kann vorgesehen sein, dass zwei oder mehr Profilinien der Zähne taktil vermessen werden, insbesondere vier oder mehr Profilinien der Zähne taktil vermessen werden, insbesondere genau vier Profilinien oder genau acht Profilinien der Zähne taktil vermessen werden. Die taktile Messung dient insbesondere der Verifikation der extrapolierten Profillinien.

Insbesondere können die Plausibilität und/oder die Genauigkeit der Extrapolation überprüft werden. Insbesondere kann die Extrapolation anhand der taktil erfassten Messdaten verbessert bzw. angepasst werden.

Es kann vorgesehen sein, dass die optische Messvorrichtung einen konfokal chromatischen Abstandssensor aufweist, wobei der konfokal chromatische Abstandssensor insbesondere einen Messbereich ausgewählt aus einem Bereich von 2 mm bis 4 mm aufweist.

Um eine zügige Messung zu ermöglichen, kann vorgesehen sein, dass das Zahnrad während der Messung vor der optischen Messvorrichtung rotiert, insbesondere mit einer konstanten Winkelgeschwindigkeit. Das zu messende Zahnrad ist beispielsweise insbesondere auf einer Drehachse bzw. einem Drehtisch der Messvorrichtung aufgespannt und kann mittels des Drehtisches um seine eigene Achse gedreht werden.

Es kann vorgesehen sein, dass ein im Wesentlichen spiralförmiger Messweg vorgegeben ist, wobei eine gekoppelte relative rotatorische und translatorische Bewegung zwischen der optischen Messvorrichtung und dem Zahnrad ausgeführt wird. Beispielsweise kann vorgesehen sein, dass das Zahnrad während der Messung mehrfach um seine eigene Achse rotiert wird, und dieser Rotation eine translatorische Verschiebung eines optischen Sensors überlagert wird. Auf diese Weise werden an jeder Zahnflanke der Verzahnung mehrfach Messpunkte für verschiedene Positionen der Zahnflanken entlang der Zahnbreite betrachtet erfasst.

Gemäß einem zweiten Aspekt betrifft die Erfindung ein Messsystem, wie in Anspruch 8 definiert, mit einer Messvorrichtung zur Verzahnungsmessung, mit einer Steuerungs- und Auswerteeinheit, wobei die Steuerungs- und Auswerteeinheit zur Durchführung der Mess- und Auswerteschritte der erfindungsgemäßen Verfahren eingerichtet ist.

Das Messsystem kann eine Koordinatenmessmaschine zur Verzahnungsmessung sein.

Das Messsystem kann integraler Bestandteil einer Werkzeugmaschine sein, die zur spanabhebenden Bearbeitung des Zahnrads, beispielsweise durch ein Werkzeug mit geometrisch bestimmter oder mit geometrisch unbestimmter Schneide, wie ein Fräswerkzeug oder ein Schleifwerkzeug, eingerichtet ist.

Es kann vorgesehen sein, dass die Messvorrichtung sowohl eine optische als auch eine taktile Messvorrichtung zur Verzahnungsmessung aufweist. Die Begriffe taktile Messvorrichtung und taktiles Messsystem sowie optische Messvorrichtung und optisches Messsystem werden vorliegend synonym verwendet.

Nachstehend wird die Erfindung anhand einer Ausführungsbeispiele darstellenden Zeichnung näher beschrieben.

Es zeigen jeweils schematisch:
- Fig. 1: ein erfindungsgemäßes Messsystem;
- Fig. 2: eine zu messende Verzahnung in einer perspektivischen Ansicht;
- Fig. 3: die zu messende Verzahnung aus Fig. 2 in einer Seitenansicht;
- Fig. 4: eine Darstellung einer zu messenden Zahnflanke;
- Fig. 5: eine Darstellung einer zu messenden Zahnflanke;
- Fig. 6: ein ergänzende taktile Messung;
- Fig. 7: ein Darstellung von Abweichungen über dem Drehwinkel;
- Fig. 8: ein Ablaufplan des erfindungsgemäßen Verfahrens.

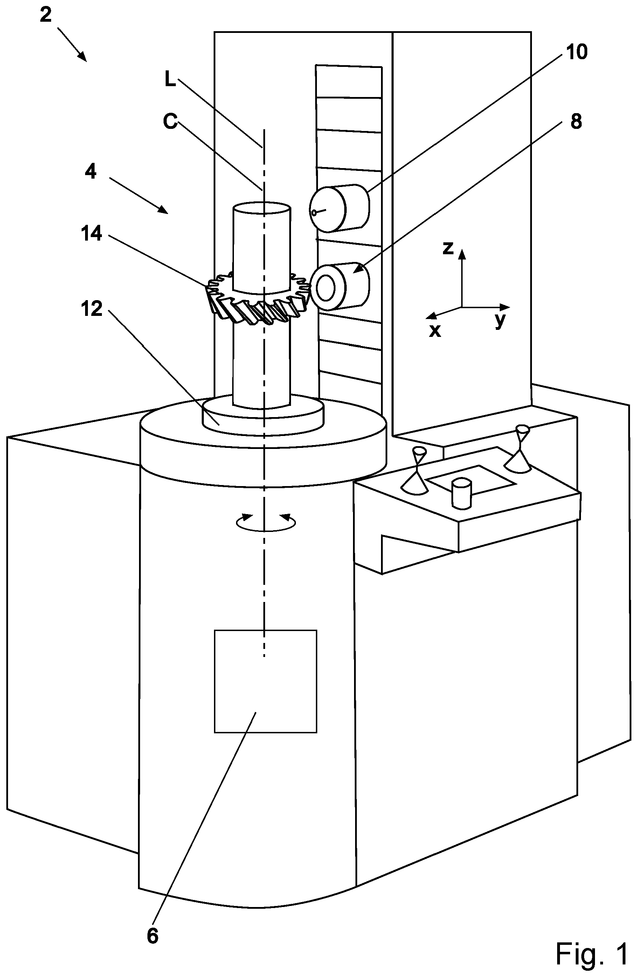

Figur 1 zeigt ein erfindungsgemäßes Messsystem 2, mit einer Messvorrichtung 4 zur Verzahnungsmessung, mit einer Steuerungs- und Auswerteeinheit 6, wobei die Steuerungs-und Auswerteeinheit 6 zur Durchführung des nachstehend beschriebenen, erfindungsgemäßen Verfahrens eingerichtet ist. Die Messvorrichtung 4 zur Verzahnungsmessung hat eine optische Messvorrichtung 8 bzw. ein optisches Messsystem 8 und eine taktile Messvorrichtung 10 bzw. ein taktiles Messsystem 10 die jeweils zur Verzahnungsmessung eingerichtet sind.

Das Messsystem 2 hat einen Drehtisch 12, mit dem eine zu messende Verzahnung 14 um ihre Längsachse L rotiert werden kann. Der Drehtisch 12 realisiert damit eine Drehachse C des Messsystems 2 wobei die Drehachse C und die Längsachse L vorliegend zusammenfallen bzw. kollinear sind.

Die optische Messvorrichtung 8 und die taktile Messvorrichtung 10 sind translatorisch entlang der kartesischen Koordinatenachsen x, y, z und verschiebbar. Das Messsystem 2 hat demnach drei translatorische Freiheitsgrade und einen rotatorischen Freiheitsgrad, um eine Relativbewegung während einer Messung zwischen der zu messenden Verzahnung 14 und den Messvorrichtungen 8, 10 zu realisieren.

Das optische Messsystem 8 ist vorliegend ein konfokal chromatischer Abstandssensor 8.

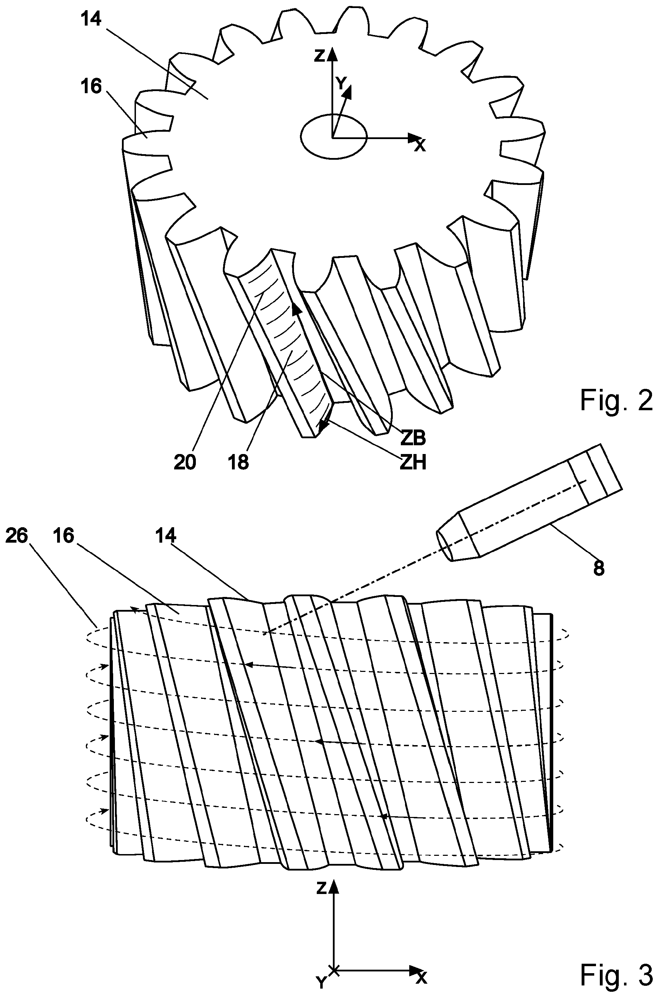

In einem ersten Verfahrensschritt (A) erfolgt zunächst ein Bereitstellen der Verzahnung 14, die eine Mehrzahl von Zähnen 16 mit Zahnflanken 18 aufweist (Fig. 2).

In einem zweiten Verfahrensschritt (B) erfolgt ein Messen von zwei oder mehr Zähnen 16 der Verzahnung 14, wobei für jeden der zwei oder mehr Zähne 16 die folgenden Verfahrensschritte durchgeführt werden:

Messen eines Segments 20 der Zahnflanke 18 des Zahns 16 und Extrapolieren des gemessenen Segments 20 zu einem extrapolierten Segment 24. Im vorliegenden Beispiel ist das gemessene Segment 20 ein Abschnitt 20 einer Profillinie 22 und das extrapolierte Segment 24 ist eine extrapolierte Profillinie 24.

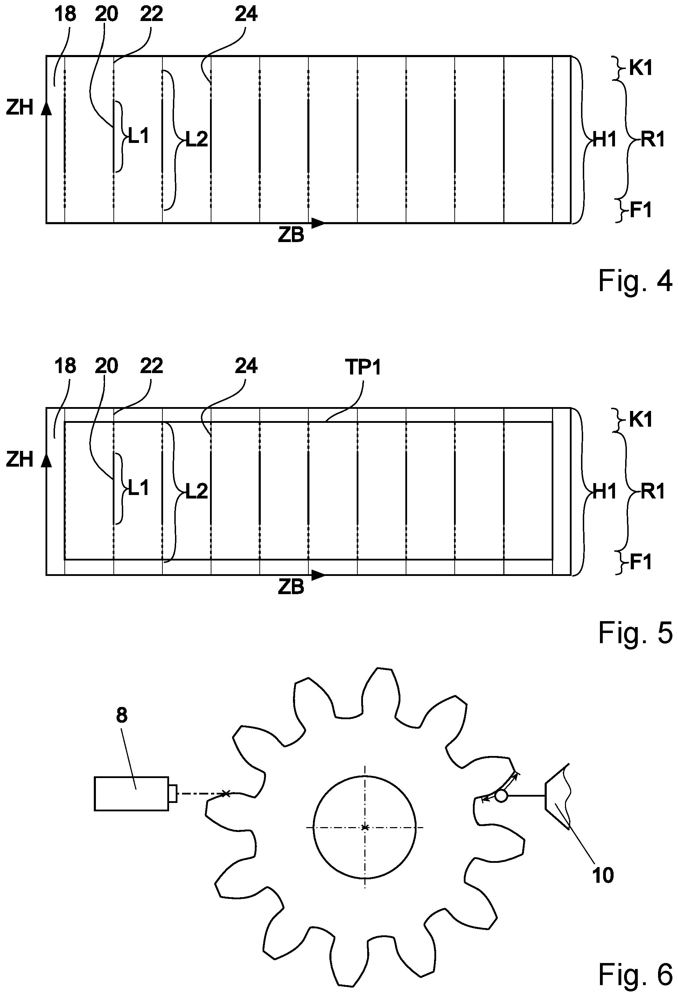

In Figur 4 ist die gemessene Zahnflanke 18 exemplarisch in vereinfachter schematischer Darstellung gezeigt. Eine Koordinate ZH wird für die Zahnhöhenrichtung verwendet und eine Koordinate ZB wird für die Zahnbreitenrichtung verwendet (Fig. 2 und Fig. 4).

Das Bezugszeichen 20 bezeichnete jeweils ein Segment 20 einer Profillinie 22, wobei das Segment 20 die Länge L1 aufweist und durch eine durchgezogene Dicke Linie dargestellt ist. Eine Länge der Profillinie 22 entspricht der Zahnhöhe H1 des Zahns 16 wobei eine jeweilige Profillinie 22 durch eine dünne durchgezogene Linie dargestellt ist. Die Länge L1 der an der Zahnflanke 18 gemessenen Segmente 20 ist daher kürzer als die Zahnhöhe H1 des Zahns 16 bzw. der Zahnflanke 18.

Das Messen der Segmente 20 der Profillinien 22 erfolgt zunächst mittels der optischen Messvorrichtung 8. Jedes der gemessenen Segmente 20 wird zu den extrapolierten Profillinien 24 extrapoliert, wobei eine Länge L2 der jeweiligen extrapolierten Profillinie 24 größer ist als die Länge L1 des gemessenen Segments 20 der jeweiligen Profillinie 22. Die extrapolierte Profillinie 24 besteht daher sowohl aus dem gemessenen Segment 20 und zusätzlich aus den durch die Extrapolation hinzugefügten Werten bzw. extrapolierten Abschnitten, die über die Länge L1 des gemessenen Segments 20 hinausgehen.

In einem dritten Verfahrensschritts (C) erfolgt ein Auswerten von Abweichungen der extrapolierten Profillinien 24 der zwei oder mehr Zähne 16.

Wie der Darstellung gemäß Figur 4 zu entnehmen, wird für jede Zahnflanke 18 eine Mehrzahl von Segmenten 20 erfasst, wobei jedes der Segmente 20 einer Profillinie 22 zugeordnet ist und jeweils zu einer extrapolierten Profillinie 24 extrapoliert wird.

Das Auswerten von Abweichungen weist vorliegend ein Bestimmen systematischer Abweichungen auf, wobei eine Welligkeitsanalyse der extrapolierten Profillinien 24 durchgeführt wird, und die Welligkeitsanalyse sowohl ein Bestimmen einer Richtung von Oberflächenwelligkeiten der extrapolierten Profillinien 24 als auch eine Frequenzanalyse der Oberflächenwelligkeiten der extrapolierten Profillinien 24 aufweist.

Vorliegend deckt die Länge L1 des Segments 20 der Profillinie 22 mehr als 30 % der Zahnhöhe H1 des Zahns 16 ab. Folglich deckt die Länge L1 des Segments 20 der Profillinie 22 auch mehr als 30 % einer um eine Höhe K1 eine Kopfrücknahme und eine Höhe F1 des Zahnfußes des Zahns 16 reduzierten Zahnhöhe R1 des Zahns 18 ab.

Weiter beträgt die Länge L1 vorliegend weniger als 70 % der Zahnhöhe H1 des Zahns 16.

Aus den gemessenen Segmenten 20 kann zudem insgesamt eine extrapolierte Topographie TP1 bestimmt und diese ausgewertet werden (Fig. 5). Die extrapolierte Topographie TP1 umfasst sowohl die optisch gemessenen Messwerte bzw. Messpunkte der Zahnflanke als auch die durch die Extrapolation hinzugefügten Werte bzw. Punkte, die im Rahmen der Auswertung wie Messwerte bzw. Messpunkte behandelt werden. Die extrapolierten Topographie TP1 weist zudem interpolierte Werte auf.

Wie in Figur 6 schematisch angedeutet, werden zwei oder mehr Profilinien 22 der Zähne 16 taktil vermessen wobei die Ergebnisse der taktilen Messung zur Verifikation der extrapolierten Profillinien 24 verwendet werden.

Figur 3 zeigt die optische Messung der Segmente der Profilinien, wobei vorliegend mehrere Segmente von Profilinien an allen Zähnen 16 gemessen werden. Während der optischen Messung rotiert das Zahnrad 14 um seine eigene Achse L, die zur Vereinfachung der Darstellung vorliegend mit der z-Achse zusammenfallend dargestellt ist.

Während der Rotation des Zahnrads 14 wird der optische Sensor 8 translatorisch in z-Richtung bewegt, sodass sich die gezeigte Messspirale 26 ergibt, und somit jede Zahnflanke 16 mehrfach von dem optischen Sensor 8 erfasst wird. Somit lassen sich in einfacher und zügiger Art und Weise eine Mehrzahl von Segmenten 20 von Profillinien 22 erfassen.

In dem Verfahrensschritt C) erfolgt die Auswertung der Messwerte, wobei den einzelnen Messpunkten der extrapolierten Profillinien ein dem Abwälzen des Zahnrads 14 entsprechender Drehwinkel zugeordnet wird. Anschließend erfolgt eine Bestimmung eines geometrisch erfassten Ordnungsspektrums durch eine Ordnungsanalyse der über dem Drehwinkel aufgetragenen Abweichungen, wobei eine oder mehrere Ausgleichs- und/oder Interpolationsfunktionen bestimmt werden können.

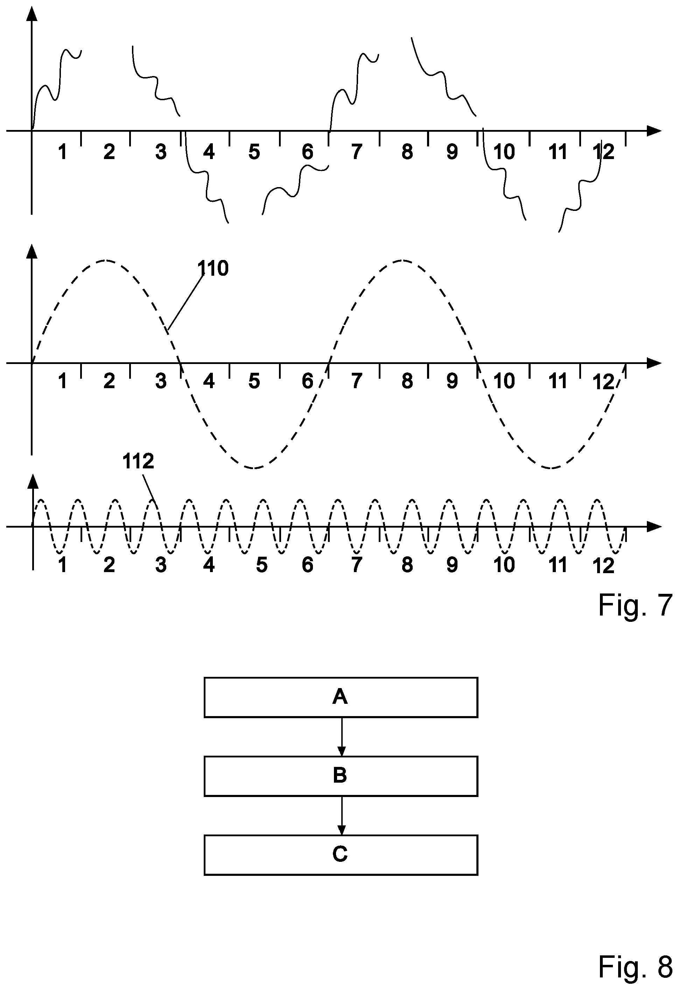

In Fig. 7 sind exemplarisch Abweichungen extrapolierter Profillinien für einige von 12 Zahnflanken zu einer vorgegebenen Sollgeometrie dem Drehwinkel beim Abwälzen entsprechend aufgereiht. Somit sind die Abweichungen (Ordinate) über dem Drehwinkel (Abszisse) derart aufgetragen, wie sie beim Abwälzen im Zahneingriff aufeinanderfolgend zur Geräuschanregung beitragen würden.

Für die über dem Drehwinkel aufgetragenen Abweichungen wird im vorliegenden Fall zunächst diejenige Ausgleichswinkelfunktion 110 mit der größten Amplitude bestimmt. Diese Ausgleichswinkelfunktion 110 repräsentiert eine erste dominante Frequenz der über dem Drehwinkel aufgetragenen geometrischen Abweichungen. Vorliegend handelt es sich bei der Ausgleichswinkelfunktion 110 um eine Sinusfunktion.

In einem nächsten Schritt werden die Abweichungen um die Ausgleichswinkelfunktion 110 bereinigt. Es wird anschließend wiederum diejenige Ausgleichswinkelfunktion 112 mit der größten Amplitude bestimmt, welche die zweite dominante Frequenz der geometrisch erfassten Abweichungen darstellt.

Auf diese Weise lässt sich sukzessive ein Ordnungsspektrum aus den geometrisch erfassten Abweichungen bestimmen, um die Oberflächenwelligkeiten zu analysieren. Dadurch, dass im Verfahrensschritt B) lediglich Segmente der Profillinien optisch gemessen worden sind, kann so eine zügige Analyse der Oberflächenwelligkeiten der Zahnflanken 102 der Verzahnung 100 erfolgen.

## Patentansprüche

1. Verfahren, mit den Verfahrensschritten:
- Bereitstellen einer Verzahnung (14), die eine Mehrzahl von Zähnen (16) mit Zahnflanken (18) aufweist;
- Messen von zwei oder mehr Zähnen (16) der Verzahnung (14), wobei für jeden der zwei oder mehr Zähne (16) die folgenden Schritte durchgeführt werden:
- Messen eines Segments (20) mindestens einer Zahnflanke (18) des Zahns (16), wobei das Messen optisch mittels einer optischen Messvorrichtung (8) erfolgt,
- Extrapolieren des gemessenen Segments (20) zu einem extrapolierten Segment (24);
- Auswerten von Abweichungen der extrapolierten Segmente (24) der zwei oder mehr Zähne (16);
wobei
- das Segment (20) einen Abschnitt (20) einer Profillinie (22) der Zahnflanke (18) aufweist oder aus einem Abschnitt (20) einer Profillinie (22) der Zahnflanke (18) besteht und
- das Extrapolieren des gemessenen Segments (20) zu dem extrapolierten Segment (24) ein Extrapolieren des Abschnitts (20) der Profilinie (22) zu einer extrapolierten Profillinie (24) aufweist **dadurch gekennzeichnet,**
- **dass** eine Länge (L1) des an der Zahnflanke (18) gemessenen Abschnitts (20) der Profilinie (22) kürzer ist als eine Zahnhöhe (H1) des Zahns (16),
- wobei eine Länge (L2) der extrapolierten Profilinie (22) größer ist als die Länge (L1) des gemessenen Abschnitts (20) der Profillinie (22), aus dem die extrapolierte Profilinie (24) extrapoliert worden ist.

2. Verfahren nach Anspruch 1,
**dadurch gekennzeichnet, dass**
- das Auswerten von Abweichungen ein Bestimmen systematischer Abweichungen aufweist,
- wobei insbesondere eine Welligkeitsanalyse der extrapolierten Segmente (24) durchgeführt wird,
- die Welligkeitsanalyse ein Bestimmen einer Richtung von Oberflächenwelligkeiten der extrapolierten Segmente (24) aufweist und/oder
- die Welligkeitsanalyse eine Frequenzanalyse von Oberflächenwelligkeiten der extrapolierten Segmente (24) aufweist.

3. Verfahren nach einem der voranstehenden Ansprüche 1 oder 2,
**dadurch gekennzeichnet, dass**
- mindestens ein Abschnitt (20) mindestens einer oder mehr weiterer Profillinien (22) der Zahnflanke (18) gemessen werden,
und/oder
- die Länge des Abschnitts (20) der Profillinie (22) mehr als 30% der Zahnhöhe (H1) des Zahns (16) beträgt, insbesondere mehr als 30% einer um eine Höhe (K1) einer Kopfrücknahme und/oder einer Höhe (F1) des Zahnfußes des Zahns (16) reduzierten Zahnhöhe (R1) des Zahns (16) beträgt
und/oder
- die Länge des Abschnitt (20) der Profillinie (22) weniger als 70% der Zahnhöhe (H1) des Zahns (16) beträgt, insbesondere weniger als 70% einer um eine Höhe (K1) einer Kopfrücknahme und/oder einer Höhe (F1) des Zahnfußes des Zahns (16) reduzierten Zahnhöhe (R1) des Zahns (16) beträgt
und/oder
- eine extrapolierte Topographie der Zahnflanke (18) bestimmt und diese extrapolierte Topographie ausgewertet wird
und/oder
- der Abschnitt (20) der Profillinie (22) innerhalb eines aktiven Bereichs der Zahnflanke liegt, und eine Länge (L1) des Abschnitts (20) der Profillinie (22) geringer ist als eine in Profilrichtung gemessene Länge des aktiven Bereichs der Zahnflanke, wobei der aktive Bereich der Zahnflanke derjenige Bereich ist, der im Betrieb des Zahnrads (16) beim Abwälzen mit einer Gegenflanken in Kontakt ist.

4. Verfahren nach einem der voranstehenden Ansprüche,
**dadurch gekennzeichnet, dass**
- zwei oder mehr Bereiche der Zähne (16) taktil vermessen werden, insbesondere vier oder mehr Bereiche der Zähne taktil vermessen werden, insbesondere genau acht Bereiche der Zähne (16) taktil vermessen werden,
- wobei die taktil gemessenen Bereiche zur Verifikation der extrapolierten Segmente (24) verwendet werden.

5. Verfahren nach einem der voranstehenden Ansprüche,
**dadurch gekennzeichnet, dass**
die optische Messvorrichtung einen konfokal chromatischen Abstandssensor aufweist, wobei der konfokal chromatische Abstandssensor insbesondere einen Messbereich ausgewählt aus einem Bereich von 2 mm - 4 mm aufweist.

6. Verfahren nach einem der voranstehenden Ansprüche,
**dadurch gekennzeichnet, dass**
das Zahnrad (14) während der Messung vor der optischen Messvorrichtung (8) rotiert, insbesondere mit einer konstanten Winkelgeschwindigkeit.

7. Verfahren nach einem der voranstehenden Ansprüche,
**dadurch gekennzeichnet, dass**
ein im Wesentlichen spiralförmiger Messweg (26) vorgegeben ist, wobei eine gekoppelte relative rotatorische und translatorische Bewegung zwischen der optischen Messvorrichtung (8) und dem Zahnrad (14) ausgeführt wird.

8. Messsystem (2),
- mit einer Messvorrichtung (4) zur Verzahnungsmessung,
- mit einer Steuerungs- und Auswerteeinheit (6),
- wobei die Steuerungs- und Auswerteeinheit (6) zur Durchführung der Mess- und Auswertesschritte eines Vefahrens nach einem der Ansprüche 1 - 7 eingerichtet ist, und
- die Messvorrichtung (4) zur Verzahnungsmessung insbesondere sowohl eine optische Messvorrichtung (8) als auch eine taktile Messvorrichtung (10) zur Verzahnungsmessung aufweist.

## Claims

1. A Process comprising the steps of:
- Providing a toothing (14), having a plurality of teeth (16) with tooth flanks (18);
- measuring two or more teeth (16) of the toothing (14), wherein for each of the two or more teeth (16) the following steps are performed:
- measuring a segment (20) of at least one tooth flank (18) of the tooth (16), wherein the measuring is performed optically by means of an optical measuring device (8),
- extrapolating the measured segment (20) to an extrapolated segment (24);
- analysing deviations of the extrapolated segments (24) of the two or more teeth (16) wherein
- the segment (20) has a section (20) of a profile line (22) of the tooth flank (18) or consists of a section (20) of a profile line (22) of the tooth flank (18) and
- the extrapolation of the measured segment (20) to the extrapolated segment (24) comprises an extrapolation of the section (20) of the profile line (22) to an extrapolated profile line (24) **characterised in that**,
- that a length (L1) of the section (20) of the profile line (22) measured at the tooth flank (18) is shorter than a tooth height (H1) of the tooth (16),
- wherein a length (L2) of the extrapolated profile line (22) is greater than the length (L1) of the measured section (20) of the profile line (22) from which the extrapolated profile line (24) has been extrapolated.

2. Process according to claim 1,
**characterised in that**
- the evaluation of deviations comprises a determination of systematic deviations,
- wherein in particular a ripple analysis of the extrapolated segments (24) is performed,
- the ripple analysis comprises a determination of a direction of surface ripples of the extrapolated segments (24) and/or
- the ripple analysis comprises a frequency analysis of surface ripples of the extrapolated segments (24).

3. Process according to one of the preceding claims 1 or 2,
**characterised in that**
- at least one section (20) of at least one or more further profile lines (22) of the tooth flank (18) are measured,
and/or
- the length of the section (20) of the profile line (22) is more than 30% of the tooth height (H1) of the tooth (16), in particular is more than 30% of a tooth height (R1) of the tooth (16) reduced by a height (K1) of a tip relief and/or a height (F1) of the tooth root of the tooth (16)
and/or
- the length of the section (20) of the profile line (22) is less than 70% of the tooth height (H1) of the tooth (16), in particular less than 70% of a tooth height (R1) of the tooth (16) reduced by a height (K1) of a tip relief and/or a height (F1) of the tooth root of the tooth (16)
and/or
- an extrapolated topography of the tooth flank (18) is determined and this extrapolated topography is analysed
and/or
- the section (20) of the profile line (22) lies within an active region of the tooth flank, and a length (L1) of the section (20) of the profile line (22) is less than a length, measured in the profile direction, of the active region of the tooth flank, the active region of the tooth flank being that region which is in contact with a mating flank during operation of the gear (16) during rolling.

4. Process according to one of the preceding claims,
**characterised in that**
- two or more regions of the teeth (16) are tactilely measured, in particular four or more regions of the teeth are tactilely measured, in particular exactly eight regions of the teeth (16) are tactilely measured,
- wherein the tactilely measured areas are used to verify the extrapolated segments (24).

5. Process according to one of the preceding claims,
**characterised in that**
the optical measuring device has a confocal chromatic distance sensor, wherein the confocal chromatic distance sensor has in particular a measuring range selected from a range of 2 mm - 4 mm.

6. Process according to one of the preceding claims,
**characterised in that**
the gear wheel (14) rotates in front of the optical measuring device (8) during the measurement, in particular at a constant angular velocity.

7. Process according to one of the preceding claims,
**characterised in that**
a substantially spiral measuring path (26) is predetermined, wherein a coupled relative rotational and translational movement is performed between the optical measuring device (8) and the gear wheel (14).

8. Measuring system (2),
- with a measuring device (4) for gear measurement,
- with a control and evaluation unit (6),
- wherein the control and evaluation unit (6) is set up to carry out the measuring and evaluation steps of a process according to one of claims 1 - 7, and
- the measuring device (4) for gear measurement has, in particular, both an optical measuring device (8) and a tactile measuring device (10) for gear measurement.

## Revendications

1. Procédé, avec les étapes de procédé:
- Préparation d'une denture (14) qui présente une pluralité de dents (16) avec des flancs de dent (18);
- mesure de deux ou plusieurs dents (16) de la denture (14), les étapes suivantes étant exécutées pour chacune des deux ou plusieurs dents (16):
- mesure d'un segment (20) d'au moins un flanc de dent (18) de la dent (16), la mesure étant effectuée optiquement au moyen d'un dispositif de mesure optique (8),
- extrapolation du segment mesuré (20) en un segment extrapolé (24);
- évaluer les écarts des segments extrapolés (24) des deux ou plusieurs dents (16);
- le segment (20) comprenant une section (20) d'une ligne de profil (22) du flanc de dent (18) ou est constitué d'une section (20) d'une ligne de profil (22) du flanc de dent (18) et
- l'extrapolation du segment mesuré (20) au segment extrapolé (24) comprenant une extrapolation de la section (20) de la ligne de profil (22) à une ligne de profil extrapolée (24) **caractérisé en ce**
- **qu'**une longueur (L1) de la section (20) de la ligne de profil (22) mesurée au niveau du flanc de dent (18) est plus courte qu'une hauteur de dent (H1) de la dent (16),
- une longueur (L2) de la ligne de profil extrapolée (22) étant supérieure à la longueur (L1) de la partie mesurée (20) de la ligne de profil (22) à partir de laquelle la ligne de profil extrapolée (24) a été extrapolée.

2. Procédé selon la revendication 1,
**caractérisé en ce que**
- l'évaluation des écarts comprend une détermination des écarts systématiques,
- une analyse d'ondulation des segments extrapolés (24) étant notamment effectuée,
- l'analyse d'ondulation comprend une détermination d'une direction d'ondulation de surface des segments extrapolés (24) et/ou
- l'analyse d'ondulation comprend une analyse de fréquence des ondulations de surface des segments extrapolés (24).

3. Procédé selon l'une des revendications 1 ou 2 précédentes,
**caractérisé en ce que**
- au moins une section (20) d'au moins une ou plusieurs autres lignes de profil (22) du flanc de la dent (18) sont mesurées,
et/ou
- la longueur du tronçon (20) de la ligne de profil (22) est supérieure à 30% de la hauteur de dent (H1) de la dent (16), en particulier supérieure à 30% d'une hauteur de dent (R1) de la dent (16) réduite d'une hauteur (K1) d'un retrait de tête et/ou d'une hauteur (F1) du pied de dent de la dent (16)
et/ou
- la longueur de la section (20) de la ligne de profil (22) est inférieure à 70% de la hauteur de dent (H1) de la dent (16), en particulier inférieure à 70% d'une hauteur de dent (R1) de la dent (16) réduite d'une hauteur (K1) d'un retrait de tête et/ou d'une hauteur (F1) du pied de la dent (16)
et/ou
- on détermine une topographie extrapolée du flanc de la dent (18) et on évalue cette topographie extrapolée
et/ou
- la section (20) de la ligne de profil (22) se trouve à l'intérieur d'une zone active du flanc de la dent, et une longueur (L1) de la section (20) de la ligne de profil (22) est inférieure à une longueur de la zone active du flanc de la dent mesurée dans la direction du profil, la zone active du flanc de la dent étant la zone qui est en contact avec un flanc opposé pendant le fonctionnement de la roue dentée (16) lors du roulement.

4. Procédé selon l'une des revendications précédentes,
**caractérisé en ce que**
- deux zones ou plus des dents (16) sont mesurées tactilement, en particulier quatre zones ou plus des dents sont mesurées tactilement, en particulier exactement huit zones des dents (16) sont mesurées tactilement,
- les zones mesurées tactilement étant utilisées pour vérifier les segments extrapolés (24).

5. Procédé selon l'une des revendications précédentes,
**caractérisé en ce que**
le dispositif de mesure optique comprenant un capteur de distance chromatique confocal, en ce le capteur de distance chromatique confocal présentant en particulier une plage de mesure choisie dans une plage de 2 mm à 4 mm.

6. Procédé selon l'une quelconque des revendications précédentes,
**caractérisé en ce que**
la roue dentée (14) tourne pendant la mesure devant le dispositif de mesure optique (8), en particulier à une vitesse angulaire constante.

7. Procédé selon l'une des revendications précédentes,
**caractérisé en ce que**
un trajet de mesure (26) sensiblement en forme de spirale est prédéfini, un mouvement relatif de rotation et de translation couplé étant effectué entre le dispositif de mesure optique (8) et la roue dentée (14).

8. Système de mesure (2),
- avec un dispositif de mesure (4) pour la mesure de dentures,
- avec une unité de commande et d'évaluation (6),
- l'unité de commande et d'évaluation (6) étant conçue pour exécuter les étapes de mesure et d'évaluation d'un procédé selon l'une des revendications 1 à 7, et
- le dispositif de mesure (4) pour la mesure de la denture présente en particulier aussi bien un dispositif de mesure optique (8) qu'un dispositif de mesure tactile (10) pour la mesure de la denture.
